# EUROPÄISCHE PATENTSCHRIFT

(11) **EP 1 118 595 B1**
(45) Veröffentlichungstag und Bekanntmachung des Hinweises auf die Patenterteilung: **21.07.2004**
(21) Anmeldenummer: 00125338.4
(22) Anmeldetag: 30.11.2000
(51) Int. Cl.: C03C 3/093, C03C 3/091

(54) **Alkalifreies Aluminoborosilicatglas und dessen Verwendungen**
ALkali-free aluminoborosilicate glass and its use
Verre aluminoborosilicate dépourvu d'alcalins et ses utilisations

(30) Priorität: 12.01.2000 DE 10000836
(43) Veröffentlichungstag der Anmeldung: 25.07.2001
(73) Patentinhaber: Schott Glas, 55122 Mainz (DE)
(72) Erfinder: Peuchert, Ulrich, Dr., 55129 Mainz (DE); Brix, Peter, Dr., 55116 Mainz (DE)

(56) Entgegenhaltungen:
- EP-A- 0 672 629
- EP-A- 0 953 549
- EP-A- 1 070 681
- EP-A- 1 078 893
- WO-A-98/27019
- DE-A- 19 601 922
- DATABASE WPI Section Ch, Week 199717 Derwent Publications Ltd., London, GB; Class L01, AN 1997-188222 XP002168035 & JP 09 048632 A (NIPPON ELECTRIC GLASS CO), 18. Februar 1997 (1997-02-18)
- DATABASE WPI Section Ch, Week 199734 Derwent Publications Ltd., London, GB; Class L01, AN 1997-369217 XP002168036 & JP 09 156953 A (NIPPON ELECTRIC GLASS CO), 17. Juni 1997 (1997-06-17)
- DATABASE WPI Section Ch, Week 200040 Derwent Publications Ltd., London, GB; Class L01, AN 2000-454638 XP002168037 & JP 2000 159541 A (NIPPON ELECTRIC GLASS CO), 13. Juni 2000 (2000-06-13)

## Beschreibung

Gegenstand der Erfindung ist ein alkalifreies Aluminoborosilicatglas. Gegenstand der Erfindung sind auch Verwendungen dieses Glases.

An Gläser für Anwendungen als Substrate in der Flüssigkristall-Flachdisplaytechnologie, z. B. in TN (Twisted Nematic)/STN (Super Twisted Nematic) - Displays, Active Matrix Liquid Crystal Displays (AMLCD's), Thin Film Transistors (TFT's) oder Plasma Adressed Liquid Crystals (PALC's) werden hohe Anforderungen gestellt. Neben einer hohen Temperaturwechselbeständigkeit sowie einer guten Resistenz bezüglich der im Herstellungsverfahren der Flachbildschirme eingesetzten aggressiven Chemikalien sollten die Gläser eine über einen weiten Spektralbereich (VIS, UV) hohe Transparenz sowie zur Gewichtseinsparung eine geringe Dichte aufweisen. Der Einsatz als Trägermaterial für integrierte Halbleiterschaltkreise z. B. in TFT-Displays ("chip on glass") erfordert darüber hinaus die thermische Anpassung an das Dünnfilmmaterial Silicium. Dieses wird üblicherweise als amorphes Silicium (a-Si) bei niedrigen Temperaturen bis 300 °C auf dem Glassubstrat abgeschieden. Durch eine nachfolgende Wärmebehandlung bei Temperaturen von ca. 600 °C rekristallisiert das amorphe Silicium partiell. Die resultierende teilweise kristalline poly-Si-Schicht ist aufgrund der a-Si-Anteile charakterisiert durch einen Wert der thermischen Ausdehnung von α 20/300 ≅ 3,7 x 10⁻⁶/K. Je nach dem Verhältnis von a-Si zu poly-Si kann der thermische Ausdehnungskoeffizient α 20/300 zwischen 2,9 x 10⁻⁶/K und 4,2 x 10⁻⁶/K variieren. Werden durch Hochtemperaturbehandlungen oberhalb 700 °C bzw. direkte Abscheidung über CVD-Prozesse weitestgehend kristalline Si-Schichten generiert, so gewünscht auch in der Dünnschichtphotovoltaik, ist ein Substrat mit deutlich reduzierter thermischer Dehnung bis 3,2 x 10⁻⁶/K oder weniger erforderlich. Für Anwendungen in der Display- und Photovoltaiktechnologie ist ferner die Abwesenheit von Alkaliionen Bedingung. Herstellungsbedingte Anteile von Natriumoxid unterhalb 1000 ppm sind in Hinblick auf die i. a. "vergiftende" Wirkung durch Eindiffusion von Na⁺ in die Halbleiterschicht noch tolerierbar.

Geeignete Gläser sollten großtechnisch in ausreichender Qualität (keine Blasen, Knoten, Einschlüsse), z. B. auf einer Floatanlage oder in Ziehverfahren wirtschaftlich produzierbar sein. Besonders die Herstellung dünner (< 1 mm) streifenfreier Substrate von geringer Oberflächenwelligkeit über Ziehverfahren erfordert eine hohe Entglasungsstabilität der Gläser. Um einem auf die Halbleiter-Microstruktur nachteilig wirkenden Schrumpf ("compaction") des Substrates während der Herstellung, insbesondere im Falle von TFT-Displays, entgegen zu wirken, benötigt das Glas eine geeignete temperaturabhängige Viskositätskennlinie: Hinsichtlich der thermischen Prozeß- und Formstabilität sollte es bei einerseits nicht zu hohen Schmelz- und Verarbeitungs (V_{A}) - temperaturen, d. h. bei einem V_{A} ≤ 1350 °C, eine ausreichend hohe Transformationstemperatur, d. h. T_{g} > 700°C aufweisen.

Die Anforderungen an Glassubstrate für die LCD-Displaytechnologie bzw. Dünnschicht-Photovoltaik-Technologie sind auch in "Glass Substrates for AMLCD applications: properties and implications" von J.C. Lapp, SPIE Proceedings, Vol. 3014, Invited paper (1997) bzw. in "Photovoltaik-Strom aus der Sonne" von J. Schmid, Verlag C.F. Müller, Heidelberg 1994 beschrieben.

Das genannte Anforderungsprofil wird am ehesten durch Erdalkalialuminoborosilicatgläser erfüllt. Die bekannten und in den folgenden Schriften beschriebenen Gläser für Display- oder Solarzellensubstrate weisen jedoch noch Nachteile auf und erfüllen nicht den gesamten Anforderungskatalog.

Einige Schriften beschreiben Gläser, die nur geringe BaO-Anteile oder gar kein BaO enthalten, so EP 714 862 B1, WO 98/27019, JP 10-72237 A und EP 510 544 B1. Solche Gläser, insbesondere solche mit niedrigen thermischen Ausdehnungskoeffizienten, d. h. mit geringem RO-Gehalt und hohem Netzwerkbildneranteil sind sehr kristallisationsanfällig. Auch weisen die meisten der Gläser sehr, insbesondere in EP 714 862 B1 und JP 10-72237A, hohe Temperaturen bei der Viskosität 10² dPas auf.

Aber auch die Herstellung von Displaygläsern mit hohen Anteilen der schweren Erdalkalioxide BaO und SrO ist aufgrund schlechter Schmelzbarkeit der Gläser mit großen Schwierigkeiten verbunden. Auch weisen solche Gläser, wie sie z. B. in DE 37 30 410 A1, US 5,116,789, US 5,116,787, EP 341 313 B1, EP 510 543 B1, JP 9-100135 A beschrieben sind, eine unerwünscht hohe Dichte auf.

Selbst Gläser mit relativ geringen Gehalten an SrO in Verbindung mit moderaten bis hohen Anteilen an BaO zeigen bezüglich ihrer Schmelzbarkeit ungünstige Viskositätskennlinien, so z. B. die Gläser aus JP 9-169538 A, WO 97/11920 und JP 4-160030 A.

Gläser mit relativ hohen Gehalten leichter Erdalkalioxide, insbesondere MgO, beschrieben z. B. in JP 9-156953 A, JP 8-295530A, JP 9-48632 A, DE 197 39 912 C1, zeigen eine gute Schmelzbarkeit und besitzen eine geringe Dichte. Jedoch erfüllen sie hinsichtlich der chemischen Beständigkeit, insbesondere gegenüber gepufferter Fluorwasserstoffsäure, der Kristallisationsbeständigkeit sowie der Temperaturbeständigkeit nicht alle Anforderungen, die an Display- und Solarzellensubstrate gestellt werden.

Gläser mit geringen Borsäuregehalten weisen zu hohe Schmelztemperaturen bzw. aufgrund dessen bei verfahrensbedingt vorgegebenen Schmelz- und Verarbeitungstemperaturen zu hohe Viskositäten auf. Dies betrifft die Gläser aus JP 10-45422 A und JP 9-263421 A.
In Kombination mit niedrigen BaO-Gehalten weisen solche Gläser außerdem eine hohe Entglasungsneigung auf.

Dagegen zeigen Gläser mit hohen Anteilen an Borsäure, wie sie beispielsweise in US 4,824,808 beschrieben sind, keine ausreichende Temperaturbeständigkeit und chemische Beständigkeit, insbesondere gegenüber salzsauren Lösungen.

Auch die Gläser, die relativ wenig SiO₂ enthalten, zeigen insbesondere wenn sie größere Mengen an B₂O₃ und/oder MgO enthalten und erdalkaliarm sind, keine ausreichend hohe chemische Beständigkeit. Dies betrifft die Gläser aus WO 97/11919 und EP 672 629 A2. Die SiO₂-reicheren Varianten der letztgenannten Schrift weisen nur geringe Al₂O₃-Anteile auf, was nachteilig für das Kristallisationsverhalten ist.

Die in JP 9-12333 A beschriebenen Gläser für Festplatten sind vergleichsweise Al₂O₃- bzw. B₂O₃-arm, wobei letztgenannte Komponente nur eine fakultative ist. Die Gläser sind hoch erdalkalioxidhaltig und besitzen eine hohe thermische Dehnung, die sie für den Einsatz in der LCD- bzw. PV-Technologie ungeeignet macht.

Aus DE 196 17 344 C1 und DE 196 03 698 C1 der Anmelderin sind alkalifreie zinnoxidhaltige Gläser mit einem thermischen Ausdehnungskoeffizienten α _{20/300} von ca. 3,7 x 10⁻⁶/K und sehr guten chemischen Beständigkeiten bekannt.

Sie sind geeignet für den Einsatz in der Displaytechnik. Da sie jedoch zwingend ZnO enthalten, sind sie insbesondere für eine Verarbeitung auf einer Floatanlage nicht optimal geeignet. Insbesondere bei höheren Gehalten ZnO (> 1,5 Gew.-%) besteht nämlich die Gefahr der Bildung von ZnO-Belägen auf der Glasoberfläche durch Verdampfung und anschließende Kondensation im Heißformgebungsbereich.

DE 196 01 022 A1 beschreibt Gläser aus einem sehr variablen Zusammensetzungsbereich, die zwingend ZrO₂ und SnO enthalten. Die ausweislich der Beispiele SrO-haltigen Gläser neigen aufgrund ihres ZrO₂-Anteils zu Glasfehlern.

DE 42 13 579 A1 beschreibt Gläser für TFT-Anwendungen mit thermischen Ausdehnungskoeffizienten < 5,5 x 10⁻⁶/K, ausweislich der Beispiele ≥ 4,0 x 10⁻⁶/K. Diese Gläser mit relativ hohen Anteilen an B₂O₃ bei vergleichsweise niedrigen SiO₂-Gehalten sind nicht sehr chemisch resistent, insbesondere nicht gegenüber verdünnter Salzsäure.

US 5,374,595 beschreibt Gläser mit thermischen Ausdehnungskoeffizienten zwischen 3,2 x 10⁻⁶/K und 4,6 x 10⁻⁶/K. Die, wie die Beispiele verdeutlichen, hoch BaO-haltigen Gläser sind relativ schwer, nicht gut schmelzbar, und ihre thermische Dehnung ist nicht ideal an weitgehend kristallines Si angepaßt.

In den ungeprüften japanischen Veröffentlichungen JP 10-25132 A, JP 10-114538 A, JP 10-130034 A, JP 10-59741 A, JP 10-324526 A, JP 11-43350 A JP 11-49520 A, JP 10-231139 A und JP 10-139467 A werden sehr große und mit vielen fakultativen Komponenten variierbare Zusammensetzungsbereiche für Displaygläser genannt, denen jeweils ein oder mehrere bestimmte Läuterungsmittel zugesetzt werden. Diese Schriften geben jedoch keinerlei Hinweise, wie gezielt Gläser mit den kompletten beschriebenen Anforderungsprofil erhalten werden können.

Es ist Aufgabe der Erfindung, Gläser bereitzustellen, die das genannte komplexe Anforderungsprofil hinsichtlich der physikalischen und chemischen Eigenschaften, das an Glassubstrate für Flüssigkristall-Displays, insbesondere für TFT-Displays, und für Dünnschichtsolarzellen, insbesondere auf Basis von µc-Si gestellt wird erfüllen, Gläser, die eine hohe Temperaturbeständigkeit, einen prozeßgünstigen Verarbeitungsbereich und eine ausreichende Entglasungsstabilität aufweisen.

Die Aufgabe wird durch ein Aluminoborosilicatglas aus dem relativ engen Zusammensetzungsbereich gemäß dem Hauptanspruch gelöst.

Das Glas enthält zwischen > 58 und 65 Gew.-% SiO₂. Bei geringeren Gehalten verschlechtert sich die chemische Beständigkeit, bei höheren Anteilen nimmt die thermische Ausdehnung zu geringe Werte an und nimmt die Kristallisationsneigung des Glases zu.

Das Glas enthält verhältnismäßig hohe Anteile an Al₂O₃, nämlich > 14 - 25 Gew.-%, bevorzugt 18 - 25 Gew.-%. Derartige Al₂O₃-Gehalte sind günstig für die Kristallisationsstabilität des Glases und wirken sich positiv auf seine Temperaturstabilität aus, ohne die Verarbeitungstemperatur zu sehr anzuheben. Bevorzugt ist ein Gehalt von mehr als 18 Gew.-%, besonders bevorzugt von wenigstens 20,5 Gew.-%, ganz besonders bevorzugt von wenigstens 21,5 Gew.-% Al₂O₃.

Der B₂O₃-Gehalt beträgt > 6 - 10,5 Gew.-%, bevorzugt > 8 - 10,5 Gew.-%. Der B203-Gehalt ist auf den genannten Höchstwert beschränkt, um eine hohe Transformationstemperatur T_{g} zu erzielen. Höhere Gehalte würden auch die chemische Beständigkeit gegenüber salzsauren Lösungen verschlechtern. Der genannte Mindestgehalt an B₂O₃ dient der Gewährleistung der guten Schmelzbarkeit und der guten Kristallisationsstabilität des Glases.

Vorzugsweise sind die netzwerkbildenden Komponenten Al₂O₃ und B₂O₃ mit voneinander abhängigen Mindestanteilen vorhanden, wodurch ein bevorzugter Gehalt an den Netzwerkbildnern SiO₂, Al₂O₃, B₂O₃ garantiert wird: So ist der Al₂O₃-Mindestgehalt vorzugsweise > 18 Gew.-% bei einem B₂O₃-Gehalt von > 6 - 10,5 Gew.-% und der B₂O₃-Mindestgehalt vorzugsweise > 8 Gew.-% bei einem Al₂O₃-Gehalt von >14 - 25 Gew.-%. Vorzugsweise, insbesondere zur Erreichung sehr niedriger Ausdehnungskoeffizienten bis zu 3,6 x 10⁻⁶/K, beträgt die Summe von SiO₂, Al₂O₃, B₂O₃ mehr als 84 Gew.-%.

Ein wesentlicher Glasbestandteil sind die netzwerkwandelnden Erdalkalioxide. Vor allem durch Variation ihrer Anteile wird innerhalb eines Summengehaltes von insgesamt 8 - 18 Gew.-% ein thermischer Ausdehnungskoeffizient α _{20/300} zwischen 2,8 x 10⁻⁶/K und 3,8 x 10⁻⁶/K erreicht. Bevorzugt ist eine Höchstsumme an Erdalkalioxiden von 15 Gew.-%, besonders bevorzugt von 12 Gew.-%. Die letztgenannten Obergrenze ist insbesondere vorteilhaft, um Gläser mit sehr niedrigen Ausdehnungen (α_{20/300} < 3,2 x 10⁻⁶/K) zu erhalten. BaO ist stets vorhanden, während MgO und CaO fakultative Bestandteile sind. Vorzugsweise sind wenigstens zwei Erdalkalioxide vorhanden, besonders bevorzugt ist das Vorhandensein aller drei genannten Erdalkalioxide.

Der BaO-Gehalt beträgt zwischen > 3 und 8 Gew.-%. Es hat sich gezeigt, daß diese relativ hohen BaO-Anteile insbesondere bei den niedrigdehnenden Glasvarianten mit recht hohen Anteilen an netzwerkbildenden Komponenten und daraus folgend einer prinzipiell eher hohen Kristallisationsneigung eine für die verschiedenen Herstellungsverfahren für Flachgläser wie Floatverfahren und die verschiedenen Ziehverfahren ausreichende Kristallisationsstabilität gewährleisten. Vorzugsweise ist der Gehalt an BaO auf maximal 5 Gew.-%, bevorzugt auf maximal 4 Gew.-%, besonders bevorzugt auf < 4 Gew.-%, beschränkt, was sich positiv auf die gewünschte geringe Dichte der Gläser auswirkt.

Auf SrO wird verzichtet. So werden die Schmelz- und Heißformgebungstemperaturen und die Dichte des Glases niedrig gehalten. Geringfügige Anteile, d. h. unter 0,1 Gew.-%, als Verunreinigungen der Gemengerohstoffe in die Glasschmelze eingebracht, sind jedoch akzeptabel.

Das Glas kann weiter bis zu 9 Gew.-% CaO enthalten. Bei höheren Gehalten nimmt die thermische Dehnung zu hohe Werte an und nimmt die Kristallisationsneigung des Glases zu. Vorzugsweise enthält das Glas wenigstens 2 Gew.-% CaO.

Das Glas kann auch bis < 3 Gew.-% MgO enthalten. Davon eher hohe Anteile sind vorteilhaft für eine niedrige Dichte und eine niedrige Verarbeitungstemperatur, während eher geringe Anteile förderlich für die chemische Beständigkeit des Glases, insbesondere gegenüber gepufferter Fluorwasserstoffsäure, sowie seine Entglasungsstabilität sind.

Weiter kann die Komponente ZnO mit bis zu < 2 Gew.-% im Glas vorhanden sein. ZnO hat einen der Borsäure ähnelnden Einfluß auf die Viskositätskennlinie, wirkt netzwerklockernd und hat einen geringeren Einfluß auf die thermische Dehnung als die Erdalkalioxide. Vorzugsweise, insbesondere bei einer Verarbeitung des Glases im Floatverfahren, ist der ZnO-Anteil auf höchstens 1,5 Gew.-%, bevorzugt auf höchstens 1,0 Gew.-%, besonders bevorzugt auf weniger als 1 Gew.-% beschränkt. Höhere Anteile würden die Gefahr störender ZnO-Beläge auf der Glasoberfläche erhöhen, die sich durch Verdampfung und anschließende Kondensation im Heißformgebungsbereich bilden können. Das Vorhandensein von wenigstens 0,1 Gew.-% ist bevorzugt, da schon geringe Zugaben von ZnO die Entglasungsstabilität erhöhen.

Das Glas ist alkalifrei. Unter alkalifrei wird hierbei verstanden, daß es im wesentlichen frei ist von Alkalioxiden, wobei es Verunreinigungen von weniger als 1000 ppm enthalten kann.

Das Glas kann bis zu 2 Gew.-% ZrO + TiO₂ enthalten, wobei sowohl der TiO₂-Gehalt als auch der ZrO₂Gehalt einzeln bis zu 2 Gew.-% betragen kann. ZrO₂ erhöht vorteilhaft die Temperaturstabilität des Glases. Aufgrund seiner Schwerlöslichkeit erhöht es jedoch die Gefahr von ZrO₂-haltigen Schmelzrelikten (sog. "Zirkonnester") im Glas. Daher wird vorzugsweise auf die Zugabe von ZrO₂ verzichtet. Geringe Gehalte an ZrO₂, die von der Korrosion zirkonhaltigen Wannenmaterials herrühren, sind unproblematisch. TiO₂ setzt vorteilhaft die Solarisationsneigung, d. h. die Abnahme der Transmission im sichtbaren Wellenlängenbereich aufgrund von UV-VIS-Strahlung, herab. Bei Gehalten von mehr als 2 Gew.-% können durch Komplexbildung mit Fe³⁺-lonen, die im Glas in geringen Gehalten infolge von Verunreinigungen der eingesetzten Rohstoffe vorhanden sind, Farbstiche auftreten.

Das Glas kann herkömmliche Läutermittel in herkömmlichen Mengen enthalten: So kann es bis zu 1,5 Gew.-% As₂O₃, Sb₂O₃, SnO₂, CeO₂, Cl⁻ (z. B. als BaCl₂), F⁻ (z. B. als CaF₂) und/oder SO₄²⁻ (z. B als BaSO₄) enthalten. Die Summe der Läutermittel soll jedoch 1,5 Gew.-% nicht überschreiten. Wenn auf die Läutermittel As₂O₃ und Sb₂O₃ verzichtet wird, ist das Glas nicht nur mit verschiedenen Ziehverfahren, sondern auch mit dem Floatverfahren verarbeitbar.

Beispielsweise im Hinblick auf eine einfache Gemengezubereitung ist es von Vorteil, daß sowohl auf ZrO₂ als auch auf SnO₂ verzichtet werden kann und dennoch Gläser mit dem genannten Eigenschaftsprofil, insbesondere mit hoher thermischer und chemischer Beständigkeit und mit geringer Kristallationsneigung, erhalten werden.

### Ausführungsbeispiele:

Aus herkömmlichen, von unvermeidlichen Verunreinigungen abgesehen im wesentlichen alkalifreien, Rohstoffen wurden bei 1620°C Gläser in Pt/lr-Tiegeln erschmolzen. Die Schmelze wurde anderthalb Stunden bei dieser Temperatur geläutert, anschließend in induktiv beheizte Platintiegel umgegossen und zur Homogenisierung 30 Minuten bei 1550°C gerührt.

Die Tabelle zeigt fünfzehn Beispiele erfindungsgemäßer Gläser mit ihren Zusammensetzungen (in Gew.-% auf Oxidbasis) und ihren wichtigsten Eigenschaften. Das Läutermittel SnO₂ (Beispiele 1 - 8, 11, 12, 14, 15) bzw. As₂O₃ (Beispiele 9, 10; 13) mit einem Anteil von 0,3 Gew.-% ist nicht aufgeführt. Folgende Eigenschaften sind angegeben:
- der thermische Ausdehnungskoeffizient α _{20/300} [10⁻⁶/K]
- die Dichte ρ [g/cm³]
- die dilatometrische Transformationstemperatur T_{g} [°C] nach DIN 52324
- die Temperatur bei der Viskosität 10⁴ dPas (bezeichnet als T 4 [°C])
- die Temperatur bei der Viskosität 10² dPas (bezeichnet als T2 [ °C], berechnet aus der Vogel-Fulcher-Tammann-Gleichung
- eine Säurebeständigkeit "HCl" als Gewichtsverlust (Abtragswert) von allseitig polierten Glasplättchen der Abmessungen 50 mm x 50 mm x 2 mm nach Behandlung mit 5 %iger Salzsäure für 24 Stunden bei 95°C [mg/cm²].
- eine Beständigkeit "BHF" gegenüber gepufferter Fluorwasserstoffsäure als Gewichtsverlust (Abtragswert) von allseitig polierten Glasplättchen der Abmessungen 50 mm x 50 mm x 2 mm nach Behandlung mit 10 % NH₄F. HF für 20 min bei 23 °C [mg/cm²]
- der Brechwert n_{d}

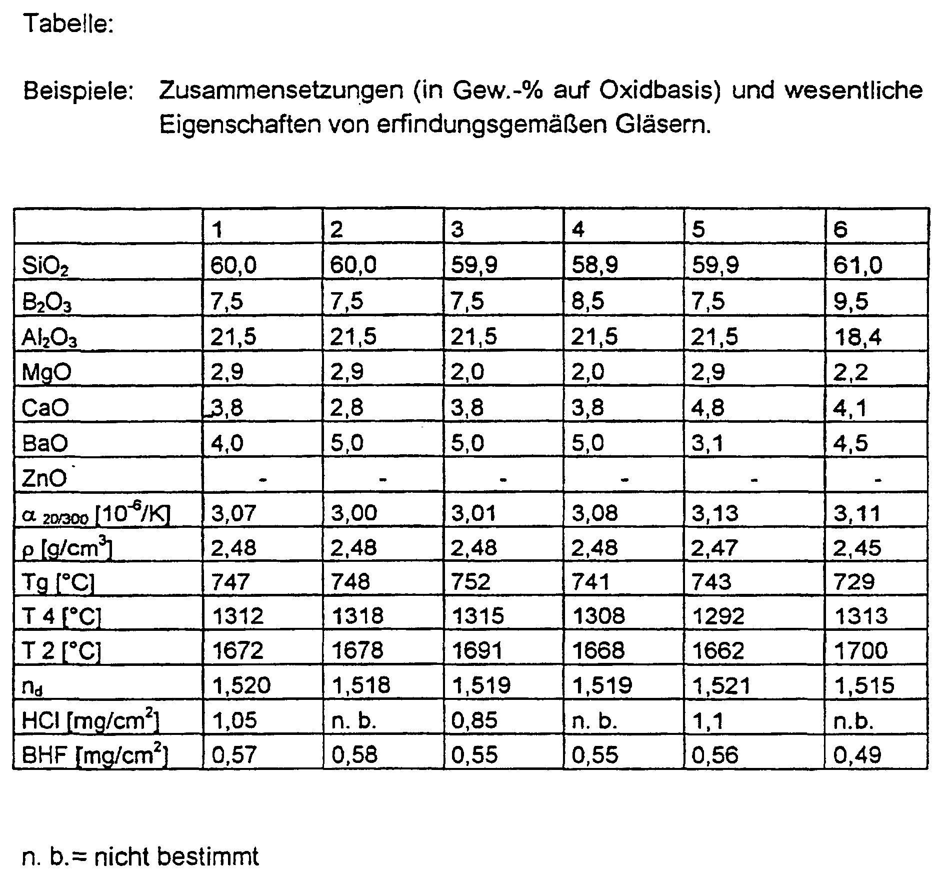

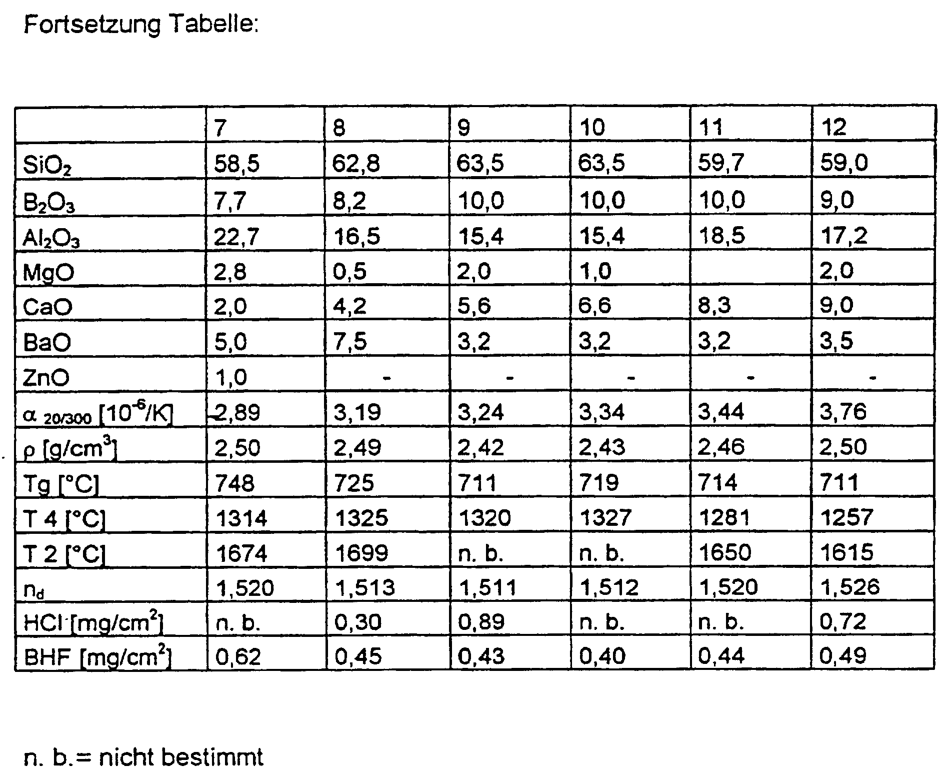

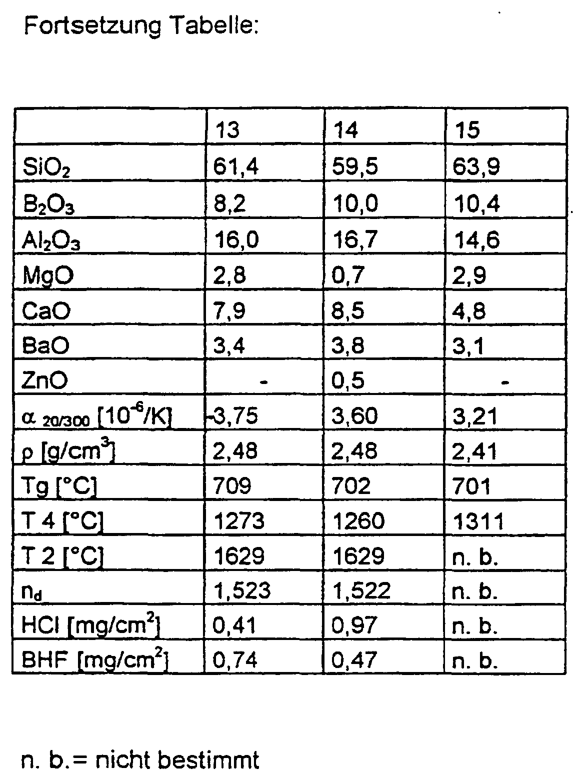

Wie die Ausführungsbeispiele verdeutlichen, besitzen die erfindungsgemäßen Gläser folgende vorteilhafte Eigenschaften:
- eine thermische Dehnung α _{20/300} zwischen 2,8 x 10⁻⁶/K und 3,8 x 10⁻⁶/K, in bevorzugten Ausführungen ≤ 3,6 x 10⁻⁶/K, in besonders bevorzugten Ausführungen < 3,2 x 10⁻⁶/K, damit angepaßt an das Ausdehnungsverhalten von amorphen und auch zunehmend polykristallinem Silicium.
- mit T_{g} > 700 °C eine hohe Transformationstemperatur, also eine hohe Temperturbeständigkeit. Dies ist wesentlich für einen möglichst geringen herstellungsbedingten Schrumpf ("compaction") und für die Verwendung der Gläser als Substrate für Beschichtungen mit amorphen Si-Schichten und deren anschließende Temperung.
- mit ρ < 2,600 g/cm³ eine geringe Dichte
- eine Temperatur bei der Viskosität 10⁴ dPas (Verarbeitungstemperatur V_{A}) von maximal 1350 °C, und eine Temperatur bei der Viskosität 10² dPas von maximal 1720 °C, was hinsichtlich der Heißformgebung sowie Schmelzbarkeit eine geeignete Viskositätskennlinie bedeutet.
- mit n_{d} ≤ 1,526 einen geringen Brechwert. Diese Eigenschaft ist physikalische Grundlage für eine hohe Transmission der Gläser.
- eine hohe chemische Beständigkeit, dokumentiert u. a. durch gute Beständigkeit gegenüber gepufferter Flußsäurelösung, was sie ausreichend inert gegen die bei der Herstellung von Flachbildschirmen verwendeten Chemikalien macht.

Die Gläser weisen einen hohe Temperaturwechselbeständigkeit und eine gute Entglasungsstabilität auf. Die Gläser sind als Flachgläser mit den verschiedenen Ziehverfahren, z.B. Micro-sheet-Down-draw-, Up-draw- oder Overflowfusion-Verfahren und in bevorzugter Ausführung, wenn sie frei von As₂O₃ und Sb₂O₃ sind, auch mit dem Floatverfahren herstellbar.

Mit diesen Eigenschaften sind die Gläser hervorragend geeignet für die Verwendung als Substratglas in der Displaytechnik, insbesondere für TFT-Displays, und in der Dünnschicht-Photovoltaik, insbesondere auf Basis von amorphen und µc-Si.

## Patentansprüche

1. Alkalifreies Aluminoborosilicatglas mit einem thermischen Ausdehnungskoeffizienten α _{20/300} zwischen 2,8 x 10⁻⁶/K und 3,8 x 10⁻⁶/K, das folgende Zusammensetzung (in Gew.-% auf Oxidbasis) aufweist:
| | |
|---|---|
| SiO₂ | > 58 - 65 |
| B₂O₃ | > 6 - 10,5 |
| Al₂O₃ | > 14 - 25 |
| MgO | 0 - < 3 |
| CaO | 0 - 9 |
| BaO | > 3 - 8 |
| mit MgO + CaO + BaO | 8 - 18 |
| ZnO | 0 - < 2 |

2. Aluminoborosilicatglas nach Anspruch 1,
**dadurch gekennzeichnet,**
**daß** es mehr als 8 Gew.-% B₂O₃ enthält.

3. Aluminoborosilicatglas nach Anspruch 1 oder 2,
**dadurch gekennzeichnet,**
**daß** es mehr als 18 Gew.-% Al₂O₃, bevorzugt wenigstens 20,5 Gew.-% Al₂O₃enthält.

4. Aluminoborosilicatglas nach wenigstens einem der Ansprüche 1 bis 3,
**dadurch gekennzeichnet,**
**daß** es höchstens 4 Gew.-% BaO enthält.

5. Aluminoborosilicatglas nach wenigstens einem der Ansprüche 1 bis 4,
**dadurch gekennzeichnet,**
**daß** es wenigstens 0,1 Gew.-% ZnO enthält.

6. Aluminoborosilicatglas nach wenigstens einem der Ansprüche 1 bis 5,
**dadurch gekennzeichnet,**
**daß** es zusätzlich enthält:
| | |
|---|---|
| ZrO₂ | 0 - 2 |
| TiO₂ | 0 - 2 |
| mit ZrO₂ + TiO₂ | 0 - 2 |
| As₂O₃ | 0 - 1,5 |
| Sb₂O₃ | 0 - 1,5 |
| SnO₂ | 0 - 1,5 |
| CeO₂ | 0 - 1,5 |
| Cl⁻ | 0 - 1,5 |
| F - | 0 - 1,5 |
| SO₄²⁻ | 0 - 1,5 |
| mit As₂O₃ + Sb₂O₃ + SnO₂ + CeO₂ + Cl⁻ + F⁻ + SO₄²⁻ | ≤ 1,5 |

7. Aluminoborosilicatglas nach wenigstens einem der Ansprüche 1 bis 6,
**dadurch gekennzeichnet,**
**daß** es bis auf unvermeidliche Verunreinigungen frei ist von Arsenoxid und Antimonoxid und daß es auf einer Floatanlage herstellbar ist.

8. Aluminoborosilicatglas nach wenigstens einem der Ansprüche 1 bis 7, das einen thermischen Ausdehnungskoeffizienten α_{20/300} von 2,8 . 10⁻⁶/K bis 3,6 · 10⁻⁶/K, bevorzugt bis 3,2 . 10⁻⁶/K, eine Transformationstemperatur Tg > 700 °C und eine Dichte ρ < 2,600 g/cm³ aufweist.

9. Verwendung des Aluminoborosilicatglases nach wenigstens einem der Ansprüche 1 bis 8 als Substratglas in der Displaytechnik.

10. Verwendung des Aluminoborosilicatglases nach wenigstens einem der Ansprüche 1 bis 8 als Substratglas in der Dünnschicht-Photovoltaik.

## Claims

1. Alkali-free aluminoborosilicate glass having a coefficient of thermal expansion α_{20/300} of between 2.8 × 10⁻⁶/K and 3.8 x 10⁻⁶/K, which has the following composition (in % by weight, based on oxide):
| | |
|---|---|
| SiO₂ | > 58 - 65 |
| B₂O₃ | > 6 - 10.5 |
| Al₂O₃ | > 14 - 25 |
| MgO | 0 - < 3 |
| CaO | 0 - 9 |
| BaO | > 3 - 8 |
| with MgO + CaO + BaO | 8 - 18 |
| ZnO | 0 - < 2 |

2. Aluminoborosilicate glass according to Claim 1, **characterized in that** it comprises more than 8% by weight of B₂O₃.

3. Aluminoborosilicate glass according to Claim 1 or 2, **characterized in that** it comprises more than 18% by weight of Al₂O₃, preferably at least 20.5% by weight of Al₂O₃.

4. Aluminoborosilicate glass according to at least one of Claims 1 to 3, **characterized in that** it comprises at most 4% by weight of BaO.

5. Aluminoborosilicate glass according to at least one of Claims 1 to 4, **characterized in that** it comprises at least 0.1% by weight of ZnO.

6. Aluminoborosilicate glass according to at least one of Claims 1 to 5, **characterized in that** it additionally comprises:
| | |
|---|---|
| ZrO₂ | 0 - 2 |
| TiO₂ | 0 - 2 |
| with ZrO₂ + TiO₂ | 0 - 2 |
| As₂O₃ | 0 - 1.5 |
| Sb₂O₃ | 0 - 1.5 |
| SnO₂ | 0 - 1.5 |
| CeO₂ | 0 - 1.5 |
| Cl⁻ | 0 - 1.5 |
| F⁻ | 0 - 1.5 |
| SO₄²⁻ | 0 - 1.5 |
| wi th As₂O₃ + Sb₂O₃ + SnO₂ + CeO₂ + Cl⁻ *+* F⁻ + SO₄²⁻ | ≤ 1.5 |

7. Aluminoborosilicate glass according to at least one of Claims 1 to 6, **characterized in that** the glass is free of arsenic oxide and antimony oxide, apart from unavoidable impurities, and that it can be produced in a float plant.

8. Aluminoborosilicate glass according to at least one of Claims 1 to 7, which has a coefficient of thermal expansion α_{20/300} of from 2.8 . 10⁻⁶/K to 3.6 · 10⁻⁶/K, preferably to 3.2 . 10⁻⁶/K, a glass transition temperature Tg of > 700°C and a density ρ of < 2.600 g/cm³.

9. Use of the aluminoborosilicate glass according to at least one of Claims 1 to 8 as substrate glass in display technology.

10. Use of the aluminoborosilicate glass according to at least one of Claims 1 to 8 as substrate glass in thin-film photovoltaics.

## Revendications

1. Verre aluminoborosilicaté exempt de métaux alcalins présentant un coefficient de dilatation thermique α_{20/300} entre 2,8 x 10⁻⁶/K et 3,8 x 10⁻⁶/K, qui présente la composition suivante (en % en poids sur base d'oxydes) :
| | |
|---|---|
| SiO₂ | >58 à 65 |
| B₂O₃ | >6 à 10,5 |
| Al₂O₃ | >14 à 25 |
| MgO | 0 à <3 |
| CaO | 0 à 9 |
| BaO | >3 à 8 |
| avec MgO + CaO + BaO | 8 à 18 |
| ZnO | 0 à <2 |

2. Verre aluminoborosilicaté selon la revendication 1, **caractérisé en ce qu'**il contient plus de 8% en poids de B₂O₃.

3. Verre aluminoborosilicaté selon la revendication 1 ou 2, **caractérisé en ce qu'**il contient plus de 18% en poids d'Al₂O₃, de préférence au moins 20,5% en poids d'Al₂O₃.

4. Verre aluminoborosilicaté selon au moins l'une quelconque des revendications 1 à 3, **caractérisé en ce qu'**il contient au plus 4% en poids de BaO.

5. Verre aluminoborosilicaté selon au moins l'une quelconque des revendications 1 à 4, **caractérisé en ce qu'**il contient au moins 0,1% en poids de ZnO.

6. Verre aluminoborosilicaté selon au moins l'une quelconque des revendications 1 à 5, **caractérisé en ce qu'**il contient en outre :
| | |
|---|---|
| ZrO₂ | 0 à 2 |
| TiO₂ | 0 à 2 |
| avec ZrO₂ + TiO₂ | 0 à 2 |
| As₂O₃ | 0 à 1,5 |
| Sb₂O₃ | 0 à 1,5 |
| SnO₂ | 0 à 1, 5 |
| CeO₂ | 0 à 1, 5 |
| Cl⁻ | 0 à 1,5 |
| F⁻ | 0 à 1,5 |
| SO₄²⁻ | 0 à 1, 5 |
| avec As₂O₃ + Sb₂O₃ + SnO₂ + CeO₂ + Cl⁻ + F⁻ + SO₄²⁻ | ≤ 1,5. |

7. Verre aluminoborosilicaté selon au moins l'une quelconque des revendications 1 à 6, **caractérisé en ce qu'**il est exempt, à d'inévitables impuretés près, d'oxyde d'arsenic et d'oxyde d'antimoine et qu'il peut être fabriqué sur une installation de flottage.

8. Verre aluminoborosilicaté selon au moins l'une quelconque des revendications 1 à 7, qui présente un coefficient de dilatation thermique α_{20/300} de 2,8 x 10⁻⁶/K à 3,6 x 10⁻⁶/K, de préférence jusqu'à 3,2 x 10⁻⁶/K, une température de transformation Tg > 700°C et une densité ρ < 2,600 g/cm³.

9. Utilisation du verre aluminoborosilicaté selon au moins l'une quelconque des revendications 1 à 8 comme verre de substrat dans la technique d'affichage.

10. Utilisation du verre aluminoborosilicaté selon au moins l'une quelconque des revendications 1 à 8 comme verre de substrat dans le domaine de la technologie photovoltaïque en couche mince.
